# EUROPÄISCHE PATENTSCHRIFT

(11) **EP 2 880 753 B1**
(45) Veröffentlichungstag und Bekanntmachung des Hinweises auf die Patenterteilung: **18.03.2020**
(21) Anmeldenummer: 13741767.1
(22) Anmeldetag: 25.07.2013
(51) Int. Cl.: H02M 1/00, H02M 3/158

(54) **GLEICHSPANNUNGSWANDLER UND VERFAHREN ZUM BETREIBEN EINES GLEICHSPANNUNGSWANDLERS UND WECHSELRICHTER MIT EINEM GLEICHSPANNUNGSWANDLER**
DC-TO-DC CONVERTER, METHOD FOR OPERATING A DC-TO-DC CONVERTER, AND INVERTER HAVING A DC-TO-DC CONVERTER
CONVERTISSEUR DE TENSION CONTINUE ET PROCÉDÉ SERVANT À FAIRE FONCTIONNER UN CONVERTISSEUR DE TENSION CONTINUE ET ONDULEUR COMPRENANT UN CONVERTISSEUR DE TENSION CONTINUE

(30) Priorität: 02.08.2012 DE 102012107101
(43) Veröffentlichungstag der Anmeldung: 10.06.2015
(73) Patentinhaber: SMA Solar Technology AG, 34266 Niestetal (DE)
(72) Erfinder: FRIEBE, Jens, 34246 Vellmar (DE); RIGBERS, Klaus, 37079 Göttingen (DE); LEDERER, Sebastian, 81677 München (DE)
(86) Internationale Anmeldenummer: PCT/EP2013/065772
(87) Internationale Veröffentlichungsnummer: WO 2014/019946

(56) Entgegenhaltungen:
- EP-A1- 2 299 569
- JP-A- 2006 114 662
- US-A1- 2007 052 397
- JONGBOK BAEK ET AL: "Digital control of synchronous buck converter with multi-mode for wide load range", POWER ELECTRONICS AND MOTION CONTROL CONFERENCE (IPEMC), 2012 7TH INTERNATIONAL, IEEE, 2. Juni 2012 (2012-06-02), Seiten 3028-3032, XP032216172, DOI: 10.1109/IPEMC.2012.6259355 ISBN: 978-1-4577-2085-7

## Beschreibung

Die Erfindung betrifft einen Gleichspannungswandler mit mindestens einem getakteten Schaltorgan und mindestens einer zwischen einem Eingangsanschluss und einem Ausgangsanschluss des Gleichspannungswandlers angeordneten Induktivität zur Zwischenspeicherung einer von dem Gleichspannungswandler übertragenen Energie, wobei die Induktivität einen Kern mit einer permanenten Magnetisierung aufweist. Der Gleichspannungswandler ist für einen bidirektionalen Betrieb eingerichtet, wobei in einer ersten Energieübertragungsrichtung das mindestens eine Schaltorgan in einer ersten Betriebsart geschaltet wird und in einer zweiten, der ersten entgegengesetzten Energieübertragungsrichtung das mindestens eine Schaltorgan in einer von der ersten abweichenden zweiten Betriebsart geschaltet wird. Die Erfindung betrifft weiterhin ein Verfahren zum Betreiben eines derartigen Gleichspannungswandlers sowie einen Wechselrichter, der einen solchen Gleichspannungswandler aufweist.

Solche getaktet betriebene Gleichspannungswandler, im Folgenden auch DC (direct current)/DC-Wandler genannt, finden beispielsweise als Eingangsstufe eines Wechselrichters Verwendung. Sie können dabei als Hochsetzsteller, Tiefsetzsteller oder kombinierte Hoch- und Tiefsetzsteller ausgeführt sein. Das mindestens eine getaktete Schaltorgan ist in einem Leistungsstromkreis des DC/DC-Wandlers angeordnet. Je nach Schaltzustand des Schaltorgans wird elektrische Energie in der Induktivität in magnetische Energie umgewandelt und dort zwischengespeichert bzw. diese zwischengespeicherte magnetische Energie in elektrische Energie zurückgewandelt und vom DC/DC-Wandler wieder abgegeben. Als Schaltorgane werden dabei beispielsweise MOSFETs (Metal-Oxide Semiconductor Field-Effect Transistors), JFETs (Junction Gate Field-Effect Transistors) oder IGBTs (Insulated Gate Bipolar Transistors) oder sonstige Transistoren eingesetzt.

Das Schaltorgan wird bei einem DC/DC-Wandler typischerweise mit einem pulsweiten modulierten (PWM) Ansteuersignal angesteuert. Dabei sind unterschiedliche Betriebsarten des DC/DC-Wandlers bekannt, die sich in der Schaltfrequenz und/oder den Schaltzeitpunkten des Schaltorgans unterscheiden. Bekannt ist hierbei beispielsweise der sogenannte CCM-Modus (Continuous Conduction Mode) oder der DCM-Modus (Discontinuous Conduction Mode), das Grenzlückenbetriebsverfahren (BCM - Boundary Conduction Mode) oder das RPM-Verfahren (Resonant Pole Mode). Eine Übersicht über verschiedene Betriebsarten von Spannungswandlern ist in dem Dokument "Highly Efficient Inverter Architectures for Three-Phase Grid Connection of Photovoltaic Generators", K. Rigbers, Shaker Verlag, Aachen, 2011 zu finden.

Aus dem Artikel "Digital control of synchronous Buck converter with multi-mode for wide load range", J. Back et al., IEEE, 2012, ist ein DC/DC-Wandler bekannt, der abhängig von der Ausgangslast des Wandlers in verschiedenen Betriebsarten betrieben wird.

Die Höhe der Energie, die in einem Schaltzyklus in der Induktivität zwischengespeichert werden kann, wird durch ihren Induktivitätswert bei maximaler Magnetisierung bestimmt. Um bei geringer Baugröße und mit geringer Windungszahl einen möglichst hohen Induktivitätswert zu erzielen, werden üblicherweise Induktivitäten mit einem Kern mit einem Material mit hoher magnetischer Permeabilitätszahl eingesetzt. Gewinnbringend erhöht der Kern den Induktivitätswert jedoch nur bis zu einer Sättigungsmagnetisierung, deren Höhe vom gewählten Kernmaterial abhängt. Wird die Induktivität mit dem Kern in Sättigung betrieben, steht für eine weitere Energieaufnahme nur noch die Streuinduktivität zur Verfügung.

Bei DC/DC-Wandlern, die unidirektional betrieben werden und entsprechend Energie im Betrieb nur in eine vorgegebene Richtung fließt, beispielsweise von einer Eingangs- zu einer Ausgangsseite, wird der Kern der Induktivität im Betrieb nur in eine magnetische Richtung magnetisiert. Bei derartigen DC/DC-Wandlern ist es bekannt, den Kern der Induktivität in die entsprechend andere magnetische Richtung vorzumagnetisieren, beispielweise durch den Einsatz von Permanentmagneten innerhalb des Kerns. Maximal verdoppelt die Vormagnetisierung den im Betrieb der Induktivität nutzbaren Magnetisierungsbereich. Ein DC/DC-Wandler mit einem vormagnetisierten Kern zeigt beispielsweise die Druckschrift EP 2 299 569 A1.

Für eine entgegengesetzte Energieflussrichtung würde bei einem solchen DC/DC-Wandler entsprechend jedoch nur noch ein sehr kleiner Magnetisierungsbereich der Induktivität zur Verfügung stehen, bis der Kern seine Sättigungsmagnetisierung erreicht hat. Zusätzlich könnte darüber hinaus nur die geringe Streuinduktivität in dieser Energieflussrichtung verwendet werden. DC/DC-Wandler mit Vormagnetisierung des Kerns ihrer Induktivität werden aus diesem Grunde bislang meist nur unidirektional eingesetzt.

Aus der Druckschrift JP 2006-114662 A ist ein DC/DC-Wandler bekannt, der in Verbindung mit einem Frequenzumrichter zum Betreiben eines Motors an einer Batterie eingesetzt wird. Der DC/DC-Wandler kann bidirektional betrieben werden, wobei in einer Hauptrichtung der Motor betrieben wird und in einer entgegengesetzten Nebenrichtung der Motor bremsend als Generator eingesetzt wird und die erzeugte Energie über den Frequenzumrichter und den DC/DC-Wandler zum Laden der Batterie verwendet wird, Dabei ist der in Hauptrichtung durch den DC/DC-Wandler fließende Strom größer als der in Nebenrichtung fließende Strom. Der DC/DC-Wandler weist eine Induktivität mit einem Kern auf, der mittels eines Permanentmagneten vormagnetisiert ist. Die Vormagnetisierung ist so gewählt, dass die maximale Magnetisierung der Induktivität in Hauptrichtung größer ist als in Nebenrichtung, wobei unter Berücksichtigung der maximalen Ströme in die jeweilige Richtung jedoch in keiner Richtung eine magnetische Sättigung des Kerns eintritt.

Wechselrichter einer Photovoltaikanlage, die der Umwandlung des von einem Photovoltaikgenerator gelieferten Gleichstroms in einen zur Einspeisung in ein Energieversorgungsnetz geeigneten Wechselstrom dienen, sind häufig dazu ausgelegt, auch Blindleistung für das Energieversorgungsnetz zu liefern. Bei Wechselrichtern, bei denen der Zwischenkreis -bzgl. des Energieflusses- vor dem DC/DC-Wandler liegt oder bei denen der DC/DC-Wandler die Stromform modelliert, muss dieser für einen bidirektionalen Betrieb ausgelegt sein, um bei der Bereitstellung von Blindleistung auch entgegen seiner Haupt-Energieflussrichtung beim Einspeisen von Wirkleistung arbeiten zu können.

Es ist eine Aufgabe der vorliegenden Erfindung, einen DC/DC-Wandler, insbesondere zur Verwendung mit einem Wechselrichter, zu schaffen, der eine Induktivität mit vormagnetisierten Kern zur Zwischenspeicherung von Energie aufweist und dennoch effektiv bidirektional betrieben werden kann.

Diese Aufgabe wird gelöst durch einen DC/DC-Wandler gemäß Anspruch 1, ein Verfahren zum Betreiben eines DC/DC-Wandlers gemäß Anspruch 8 und einen Wechselrichter, aufweisend einen DC/DC-Wandler gemäß Anspruch 11. Vorteilhafte Ausführungsformen sind in den abhängigen Ansprüchen definiert.

Ein erfindungsgemäßer DC/DC-Wandler der eingangs genannten Art ist für einen bidirektionalen Betrieb eingerichtet, stellt also einen sogenannten 2-Quadranten-Steller dar. Dabei wird in einer ersten Energieübertragungsrichtung das mindestens eine Schaltorgan in einer ersten Betriebsart geschaltet, wohingegen das mindestens eine Schaltorgan in einer zweiten, der ersten entgegengesetzten Energieübertragungsrichtung in einer von der ersten abweichenden zweiten Betriebsart geschaltet wird.

Bedingt durch die Bauart des DC/DC-Wandlers als 2-Quadranten-Steller, bei dem die Induktivität zwischen einem Eingangsanschluss und einem Ausgangsanschluss des DC/DC-Wandlers angeordnet ist, fließt der Strom in den beiden Energieübertragungsrichtungen in unterschiedlicher Richtung durch die Induktivität. Ein bidirektionaler Betrieb wird ermöglicht, indem der in einer Energieübertragungsrichtung, der Nebenrichtung, kleinere nutzbare Magnetisierungsbereich durch die unterschiedliche Betriebsart zumindest teilweise kompensiert wird. Dieses wird erfindungsgemäß dadurch erreicht, dass in der zweiten Energieübertragungsrichtung und damit in der zweiten Betriebsart das mindestens eine getaktete Schaltorgan mit einer Schaltfrequenz geschaltet ist, die variabel ist und dynamisch an die zu übertragene Leistung angepasst ist. Es wird somit ermöglicht, dass auch ein DC/DC-Wandler, bei dem eine Induktivität mit vormagnetisiertem Kern eingesetzt wird, bidirektional eingesetzt werden kann. Eine etwas geringere Effektivität des DC/DC-Wandlers in der Nebenrichtung ist dabei nicht hinderlich, insbesondere wenn ein Leistungsfluss in einer der beiden Energieübertragungsrichtungen nur kurzzeitig benötigt wird.

In einer vorteilhaften Ausgestaltung des DC/DC-Wandlers weist dieser mindestens zwei getaktete Schaltorgane auf, von denen ein erstes Schaltorgan in einer Reihenschaltung mit der Induktivität angeordnet ist, wobei ein Mittelabgriff zwischen dem ersten Schaltorgan und der Induktivität über ein zweites Schaltorgan mit einem weiteren Ausgangsanschluss verbunden ist. Dieses stellt eine einfache Umsetzung eines 2-Quadranten-Stellers dar.

In einer weiteren vorteilhaften Ausgestaltung des DC/DC-Wandlers ist die erste Betriebsart CCM und die zweite Betriebsart BCM oder RPM. Diese stellen geeignete Kombinationen von Betriebsarten dar, die in der ersten Energieübertragungsrichtung eine effektive Übertragung mit gutem Wirkungsgrad erlauben und bei denen auch in der zweiten Energieübertragungsrichtung durch Anpassung von Schaltparametern, z.B. Schaltzeitpunkten, Schaltfrequenzen, eine Leistungsübertragung erfolgen kann.

In einer weiteren vorteilhaften Ausgestaltung des DC/DC-Wandlers ist ein Dauermagnet im Kern der Induktivität angeordnet, um die permanente Magnetisierung zu erzielen. Bevorzugt ist die permanente Magnetisierung dabei größer als 80% und besonders bevorzugt größer als 90% einer Sättigungsmagnetisierung des Kerns der Induktivität. Mit einer derart großen permanenten Magnetisierung kann bei gleicher Leistungsübertragung eine baulich deutlich kleinere und leichtere Induktivität eingesetzt werden.

In einer weiteren vorteilhaften Ausgestaltung des DC/DC-Wandlers ist in einer Reihenschaltung zu der Induktivität eine Zusatzinduktivität angeordnet, die bevorzugt einen kleineren Induktivitätswert aufweist als die Induktivität. Die Zusatzinduktivität ist in der ersten Energieübertragungsrichtung, aber auch in der zweiten Energieübertragungsrichtung wirksam. Auf diese Weise kann gezielt ein auch für die zweite Energieübertagungsrichtung wirksamer Mindest-Induktivitätswert eingestellt werden.

Ein erfindungsgemäßer Wechselrichter, insbesondere für Photovoltaikanlagen, weist einen derartigen DC/DC-Wandler auf. Bei einem Einsatz des DC/DC-Wandlers in Verbindung mit einem Wechselrichter wird die zweite Energieübertragungsrichtung als Nebenrichtung üblicherweise nur in den Ausnahmefällen verwendet, in denen vom Wechselrichter Blindleistung für das Energieversorgungsnetz bereitgestellt wird. Eine etwas geringere Effektivität des DC/DC-Wandlers in der Nebenrichtung ist dabei nicht hinderlich. Insbesondere wenn nur kurzzeitig (z.B. mehrere Minuten) eine Leistung in Nebenrichtung übertragen/gewandelt werden soll, kann durch die thermischen Kapazitäten des Wechselrichteraufbaus auch eine gegenüber üblichem Betrieb zusätzlich entstehende Verlustleistung in Kauf genommen werden. Ein Umschalten zwischen den beiden Energieübertragungsrichtungen und entsprechend den beiden Betriebsarten, kann dabei innerhalb einer Netzperiodendauer des Energieversorgungsnetzes erfolgen, so dass DC/DC-Wandler nur in dem Zeitabschnitt einer Netzperiode, in der Blindleistung fließt, in der zweiten, weniger effektiven Betriebsart betrieben wird.

Bei einem erfindungsgemäßen Verfahren dient dem Betreiben eines DC/DC-Wandlers mit mindestens einem getakteten Schaltorgan und mindestens einer Induktivität zur Zwischenspeicherung von dem DC/DC-Wandler übertragenen Energie, wobei die Induktivität einen Kern mit permanenter Magnetisierung aufweist. Der DC/DC-Wandler ist für einen bidirektionalen Betrieb mit einer ersten Energieübertragungsrichtung und einer der ersten entgegengesetzten zweiten Energieübertragungsrichtung eingerichtet ist, wobei das mindestens eine Schaltorgan in der ersten Energieflussrichtung in einer ersten Betriebsart geschaltet wird und in der zweiten Energieübertragungsrichtung in einer von der ersten abweichenden zweiten Betriebsart geschaltet wird, wobei eine Schaltfrequenz des mindestens einen Schaltorgans variabel ist und dynamisch an die zu übertragene Leistung angepasst wird, und wobei die Induktivität in der ersten und der zweiten Energieflussrichtung in unterschiedlichen Richtungen von einem Strom durchflossen wird. Es ergeben sich ebenfalls die im Zusammenhang mit dem DC/DC-Wandler und dem Wechselrichter genannten Vorteile.

In einer vorteilhaften Ausgestaltung des Verfahrens wird in der ersten Betriebsart das mindestens eine Schaltorgan mit einer vorgegebenen konstanten Schaltfrequenz geschaltet, wohingegen in der zweiten Betriebsart das mindestens eine Schaltorgan mit einer variablen Schaltfrequenz geschaltet wird, die höher als die konstanten Schaltfrequenz der ersten Betriebsart. Die höhere Schaltfrequenz ermöglicht es, auch in der zweiten Energieübertragungsrichtung eine hohe Leistung zu übertragen. Besonders bevorzugt ist die erste Betriebsart CCM und die zweite Betriebsart BCM oder RPM.

Weitere vorteilhafte Ausgestaltungen und Weiterbildungen sind in den abhängigen Ansprüchen angegeben.

Die Erfindung wird nachfolgend anhand von Ausführungsbeispielen mithilfe von elf Figuren näher erläutert. Die Figuren zeigen:
- Fig. 1: ein erstes Ausführungsbeispiel eines DC/DC-Wandlers in einem schematischen Schaltbild;
- Fig. 2: der DC/DC-Wandler des ersten Ausführungsbeispiels mit eingezeichneten Strompfaden in einer ersten Betriebsart;
- Fig. 3: ein Diagramm zur zeitlichen Abhängigkeit eines Stromverlaufs beim DC/DC-Wandler im ersten Ausführungsbeispiel und der ersten Betriebsart;
- Fig. 4: den DC/DC-Wandler des ersten Ausführungsbeispiels mit eingezeichneten Strompfaden in einer nicht erfindungsgemäßen zweiten Betriebsart;
- Fig. 5: ein Diagramm zur zeitlichen Abhängigkeit eines Stroms des DC/DC-Wandler des ersten Ausführungsbeispiels in der nicht erfindungsgemäßen zweiten Betriebsart;
- Fig. 6: ein Flussdiagramm eines Betriebsverfahrens eines DC/DC-Wandlers;
- Fig. 7: den DC/DC-Wandler des ersten Ausführungsbeispiels mit eingezeichneten Strompfaden in einer erfindungsgemäßen Ausgestaltung der zweiten Betriebsart;
- Fig. 8: ein Diagramm zur zeitlichen Abhängigkeit eines Stroms des DC/DC-Wandlers des ersten Ausführungsbeispiels in der erfindungsgemäßen Ausgestaltung der zweiten Betriebsart;
- Fig. 9: den DC/DC-Wandler des ersten Ausführungsbeispiels mit eingezeichneten Strompfaden in einer alternativen Ausgestaltung der zweiten Betriebsart;
- Fig. 10: ein Diagramm zur zeitlichen Abhängigkeit eines Stroms des DC/DC-Wandler im ersten Ausführungsbeispiel in der alternativen Ausgestaltung der zweiten Betriebsart; und
- Fig. 11: ein zweites Ausführungsbeispiel eines DC/DC-Wandlers in einem schematischen Schaltbild.

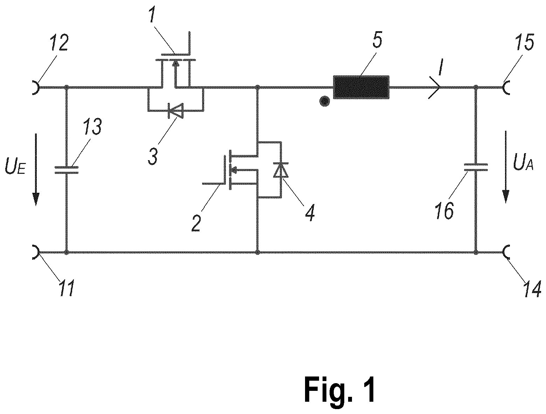

Fig. 1 zeigt einen als 2-Quadranten-Steller ausgebildeten DC/DC-Wandler in einem schematischen Schaltbild in einem ersten Ausführungsbeispiel.

Der DC/DC-Wandler weist erste Anschlüsse 11, 12 auf, mit denen er mit einer Stromquelle oder alternativ mit einer Last verbunden wird. Der DC/DC-Wandler ist dazu eingerichtet, bidirektional zu arbeiten. Dennoch ist eine erste Energieübertragungsrichtung, die in der Figur von links nach rechts verläuft, bevorzugt. Diese erste Energieübertragungsrichtung wird im Folgenden auch Hauptrichtung genannt. Die ersten Anschlüsse 11, 12 werden zur einfacheren Darstellung nachfolgend Eingangsanschlüsse 11,12 genannt, da sie beim Betrieb des DC/DC-Wandlers in der Hauptrichtung die Eingangsanschlüsse des DC/DC-Wandlers darstellen. Ein parallel zu den Eingangsanschlüssen 11, 12 angeordneter Glättungskondensator 13 stellt entsprechend einen Eingangskondensator dar.

Auf der rechten Seite der Fig. 1 angeordnete zweite Anschlüsse 14, 15 stellen beim Betrieb des DC/DC-Wandlers in der Hauptrichtung Ausgangsanschlüsse dar und werden entsprechend nachfolgend der einfacheren Darstellung halber auch als Ausgangsanschlüsse 14, 15 bezeichnet. Ein parallel zu den Ausgangsanschlüssen 14, 15 geschalteten Glättungskondensator 16 stellt entsprechend einen Ausgangskondensator dar. Beim Ausführungsbeispiel der Fig. 1 sind der Eingangsanschluss 11 und der Ausgangsanschluss 14 unmittelbar miteinander verbunden. Zwischen dem Eingangsanschluss 12 und dem Ausgangsanschluss 15 ist eine Reihenschaltung aus einem ersten Schaltorgan 1 und einer Induktivität 5 angeordnet. Der Mittelabgriff zwischen dem ersten Schaltorgan 1, nachfolgend abgekürzt erster Schalter 1 genannt, und der Induktivität 5 ist über ein zweites Schaltorgan 2, nachfolgend abgekürzt zweiter Schalter 2 genannt, mit dem Eingangsanschluss 11 bzw. dem Ausgangsanschluss 14 verbunden. In Hauptrichtung, also bei Energiefluss von den Eingangsanschlüssen 11, 12 zu den Ausgangsanschlüssen 14, 15 fließt durch die Induktivität 5 ein Strom I > 0. In dieser Hauptrichtung stellt der DC/DC-Wandler der Fig. 1 einen Tiefsetzsteller, auch Abwärtswandler genannt, dar. Die Induktivität 5, beispielsweise eine Spule, weist einen Kern mit einer permanenten Magnetisierung auf. Die permanente Magnetisierung, auch Vormagnetisierung genannt, kann beispielsweise durch einen in den Kern eingesetzten Dauermagneten hervorgerufen werden. Die Vormagnetisierung weist in eine Polarität auf, die entgegengesetzt zur Polarität ist, in der der Kern beim Betrieb des Wechselrichters in Hauptrichtung magnetisiert wird.

In einer zweiten, der Hauptrichtung entgegengesetzten Energieflussrichtung, in der Energie von den Ausgangsanschlüssen 14, 15 zu den Eingangsanschlüssen 11, 12 fließt, stellt der DC/DC-Wandler der Fig. 1 einen Hochsetzsteller, auch Aufwärtswandler genannt, dar. Die zweite Energieflussrichtung wird nachfolgend auch als Nebenrichtung bezeichnet. Parallel zur Schaltstrecke des ersten Schalters 1 ist eine erste Freilaufdiode 3 und parallel zur Schaltstrecke des zweiten Schalters 2 eine zweite Freilaufdiode 4 angeordnet.

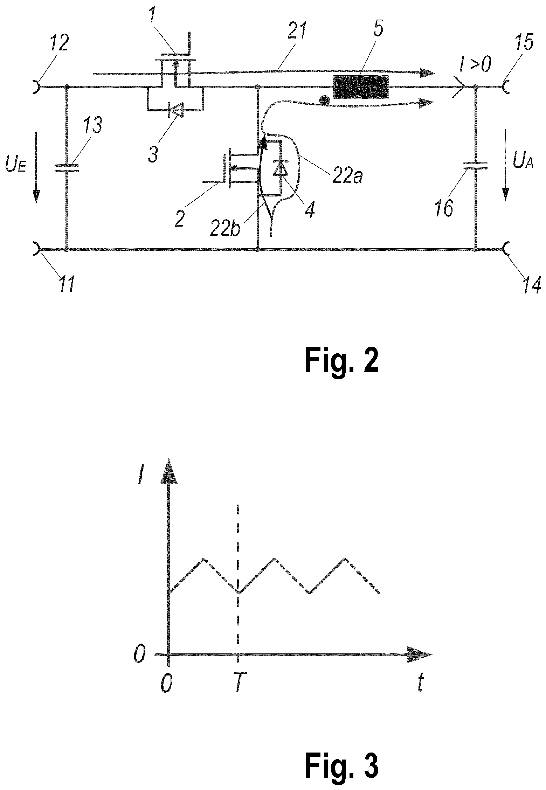

In Fig. 2 ist der DC/DC-Wandler der Fig. 1 beim Betrieb in Hauptrichtung, also mit positivem Strom I > 0 wiedergegeben. In der Hauptrichtung wird der DC/DC-Wandler in einer ersten Betriebsart betrieben, bei der zumindest der erste Schalter 1 mit einer vorgegebenen konstanten Frequenz geschaltet wird. Das Schalten des Schalters 1 und ggf. des zweiten Schalters 2 wird dabei von einer Ansteuerschaltung vorgenommen, die aus Gründen der Übersichtlichkeit in den Figuren nicht dargestellt ist. Wenn der erste Schalter 1 angesteuert (geschaltet) ist, fließt Strom durch den Schalter 1 entlang des in der Fig. 2 eingezeichneten Strompfads 21 durch die Induktivität 5, wodurch in dieser ein sich der Vormagnetisierung überlagerndes Magnetfeld aufgebaut wird. Entsprechend wird magnetische Energie im Magnetfeld der Induktivität 5 gespeichert. Da der Kern der Induktivität 5 gegenüber dem sich aufbauenden Magnetfeld mit umgekehrter Polarität vormagnetisiert ist, steht für das sich aufbauende Magnetfeld ein um die Höhe der Vormagnetisierung vergrößerter Magnetisierungsbereich zur Verfügung, bevor der Kern in die Sättigungsmagnetisierung gebracht wird. Der in Hauptrichtung nutzbare Magnetisierungsbereich kann maximal das Doppelte der Sättigungsmagnetisierung des Kerns betragen. Es ist auch möglich, eine Vormagnetisierung zu wählen, die kleiner als die Sättigungsmagnetisierung ist, beispielsweise um 10 % kleiner.

In Fig. 3 ist der Verlauf des Stromes I in Abhängigkeit der Zeit t schematisch wiedergegeben. Während der ersten Taktphase, in der der erste Schalter 1 geschaltet ist und Strom entlang dem Strompfad 21 fließt, steigt der Strom I durch die Induktivität 5 linear an. In einer zweiten Schaltphase wird der erste Schalter 1 geöffnet, woraufhin der Strom I auf die zweite Freilaufdiode 4 kommutiert, was in der Fig. 2 durch den Strompfad 22a angedeutet ist. Der Strom I fällt, wie in Fig. 3 im gestrichelten Abschnitt des Stromverlaufs zu erkennen ist, daraufhin linear ab. Nach Ablauf des Schaltzyklus zur Periodendauer T wird der erste Schalter 1 wieder eingeschaltet, woraufhin der Strom entsprechend wiederum linear ansteigt und entlang dem Strompfad 21 fließt. In dieser ersten Betriebsart ist folglich entweder der erste Schalter 1 oder die zweite Freilaufdiode 4 leitend. Von diesen beiden Elementen ist zu jedem Zeitpunkt immer eines in einem leitenden Zustand, weswegen diese Betriebsart auch als CCM (Continuous Conduction Mode) bezeichnet wird. Die Taktfrequenz ist dabei fest vorgegeben. Aufgrund des hohen Induktivitätswertes, der in der Hauptrichtung zur Verfügung steht und des vergrößerten Magnetisierungsbereichs kann die Induktivität eine relativ große Energiemenge zwischenspeichern. Das äußert sich in einer relativ geringen Variation des Stroms I innerhalb einer Periode T.

In einer Alternative ist vorgesehen, im zweiten Taktzyklus den zweiten Schalter 2 aktiv einzuschalten, so dass der Strom im zweiten Taktzyklus nicht über die zweite Freilaufdiode 4, sondern über den zweiten Schalter 2, wie dieses in der Fig. 2 durch den Strompfad 22b angedeutet ist. Es ergibt sich im Wesentlichen der gleiche Stromverlauf wie in Fig. 3 dargestellt ist, mit dem Vorteil, dass Durchlassverluste aufgrund des geringeren Durchgangswiderstands des ersten Schalters 2 gegenüber der zweiten Freilaufdiode 4 verringert sind.

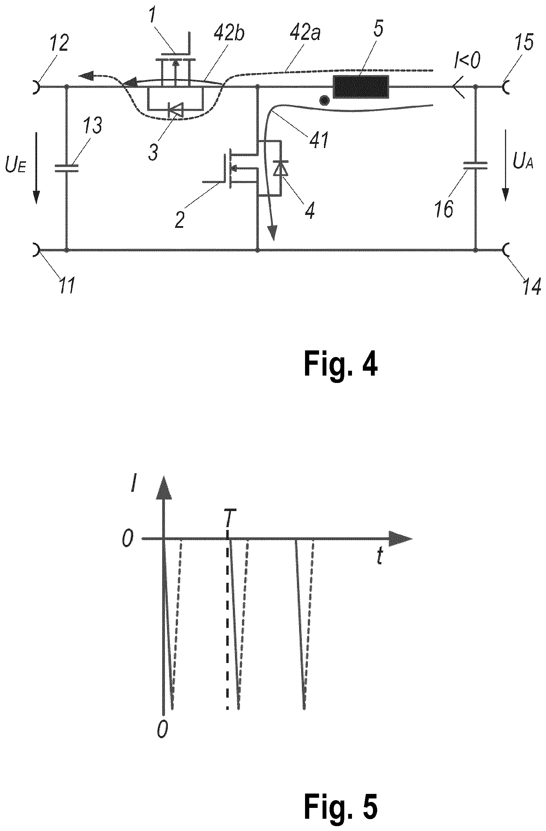

Fig. 4 zeigt in einer Darstellung analog zu Fig. 2 den Betrieb des DC/DC-Wandlers der Fig. 1 in der Nebenrichtung in einer nicht erfindungsgemäßen Ausgestaltung des Betriebsverfahrens. In dem Diagramm in Fig. 5 ist analog zu Fig. 3 die Zeitabhängigkeit des Stromflusses I angegeben.

In einem ersten Abschnitt des Schaltzyklus wird der zweite Schalter 2 angesteuert und wird leitend. Es setzt entsprechend ein Stromfluss durch die Induktivität 5 und dem zweiten Schalter 2 ein, wie in der Fig. 4 durch den Strompfad 41 symbolisiert ist.

In diesem ersten Abschnitt des Schaltzyklus wird der Strom I negativ (I < 0), wobei sein Betrag relativ stark ansteigt. Dieser verglichen mit dem Betrieb in Hauptrichtung (vgl. Fig. 3) starke Anstieg resultiert aus dem geringeren effektiven Induktivitätswert, den die Induktivität 5 aufgrund der Vormagnetisierung in der Nebenrichtung aufweist. Sobald die Sättigungsmagnetisierung des Kerns erreicht ist, steht nur die Streuinduktivität zur Energiespeicherung zur Verfügung.

In einer zweiten Taktphase wird der zweite Schalter 2 geöffnet, woraufhin der Strom durch die Induktivität 5 über die erste Freilaufdiode 3 kommutiert und ein Stromfluss über die Eingangsanschlüsse 11, 12 einsetzt. Dieses ist durch den Strompfad 42a in der Fig. 4 angegeben. In einer alternativen Ausgestaltung kann wiederum der erste Schalter 1 aktiv geschaltet werden, so dass er in dieser zweiten Taktphase den Stromfluss anstelle der ersten Freilaufdiode 3 übernimmt. Dieses ist durch den Strompfad 42b wiedergegeben. Die sich ergebende Abhängigkeit des Stromes I von der Zeit entspricht der in Fig. 5 gezeigten.

Aufgrund des in Nebenrichtung kleineren effektiven Induktivitätswerts der Induktivität 5 sinkt der Strom I bereits vor der Periodendauer T eines Schaltzyklus auf null ab. Der Stromfluss I zeigt somit deutlich größere Variationen als beim Betrieb in der Hauptrichtung (vgl. Fig. 3), die von dem Glättungskondensator 13 aufgefangen werden müssen. Da die beteiligten Schaltorgane, der zweite Schalter 2 bzw. die erste Freilaufdiode 3 oder der erste Schalter 1 nicht zu allen Zeitpunkten leitend sind und der Strom in der Induktivität 5 zeitweise auf null abfällt, wird diese Betriebsart auch als DCM (Discontinuous Conduction Mode) bezeichnet. Der DCM-Modus ist bei gleichem arithmetischen Strommittelwert mit höheren Stromeffektiv- und Stromspitzenwerten verbunden als der CCM-Modus, weswegen Durchgangsverluste höher ausfallen können. Es kann jedoch trotz der kleineren Induktivität eine gleichermaßen große Energiemenge übertragen werden.

Der DC/DC-Wandler bzw. das Verfahren zum Betreiben eines DC/DC-Wandlers, bei dem in Haupt- und Nebenrichtung der DC/DC-Wandler in unterschiedlichen Betriebsarten betrieben wird, ermöglicht somit, dass auch ein DC/DC-Wandler, bei dem eine Induktivität mit vormagnetisiertem Kern eingesetzt wird, bidirektional eingesetzt werden kann. Bei einem Einsatz des DC/DC-Wandlers in Verbindung mit einem Wechselrichter wird die Nebenrichtung nur in den Ausnahmefällen verwendet, in denen vom Wechselrichter Blindleistung für das Energieversorgungsnetz bereitgestellt wird. Eine etwas geringere Effektivität des DC/DC-Wandlers in der Nebenrichtung ist dabei nicht hinderlich. Insbesondere wenn nur kurzzeitig (z.B. mehrere Minuten) eine Leistung in Nebenrichtung übertragen/gewandelt werden soll, kann durch die thermischen Kapazitäten des Wechselrichteraufbaus auch eine gegenüber üblichem Betrieb zusätzlich entstehende Verlustleistung in Kauf genommen werden. Ein Umschalten zwischen den beiden Energieübertragungsrichtungen und entsprechend den beiden Betriebsarten, kann dabei innerhalb einer Netzperiodendauer des Energieversorgungsnetzes erfolgen, so dass DC/DC-Wandler nur in dem Zeitabschnitt einer Netzperiode, in der Blindleistung fließt, in der zweiten, weniger effektiven Betriebsart betrieben wird.

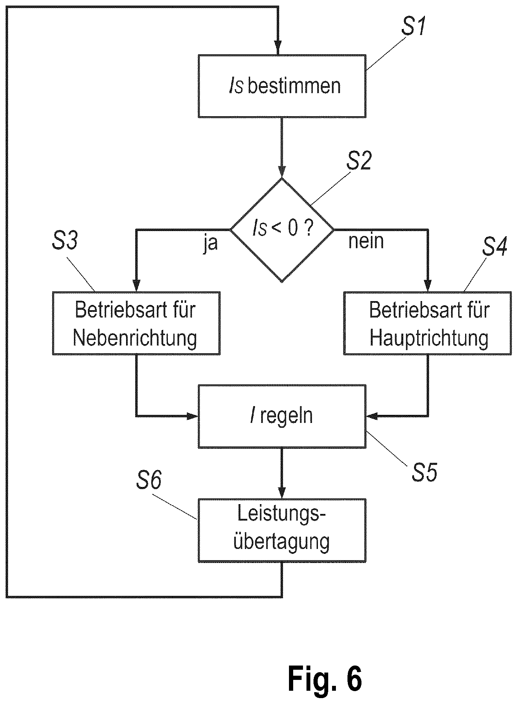

Fig. 6 zeigt anhand eines Flussdiagramms ein Betriebsverfahren für einen DC/DC-Wandler, beispielsweise dem in Fig. 1 gezeigten DC/DC-Wandler, zur Umschaltung zwischen den beiden Energieübertragungsrichtungen.

In einem ersten Schritt S1 legt eine dem DC/DC-Wandler übergeordnete Regelvorrichtung einen Stromsollwert I_{S} für den DC/DC-Wandler fest. Ein derartiger Regelschritt ist grundsätzlich für DC/DC-Wandler bekannt und bedarf daher an dieser Stelle keiner weiteren Erläuterungen.

Der festgelegte Stromsollwert I_{S} wird in einem nächsten Schritt S2 auf seinen Vorzeichen hin überprüft. Falls der vorgegebene Stromsollwert größer oder gleich null ist, wird das Verfahren in einem nächsten Schritt S3 fortgesetzt. Ist der vorgegebene Stromsollwert I0 kleiner als null, wird das Verfahren mit einem Schritt S4 fortgesetzt.
In dem Schritt S3 wird eine Regeleinrichtung für den DC/DC-Wandler, die in die übergeordnete Regelung integriert sein kann oder separat von dieser ausgeführt sein kann, auf einen Betrieb des DC/DC-Wandlers in Hauptrichtung eingestellt. In dem Schritt S4 wird diese Regelung dagegen für einen Betrieb in der Nebenrichtung eingestellt. Entsprechend werden Marker oder Variablen der Regeleinrichtung so gesetzt, dass ein Betrieb in der zugeordneten Betriebsart, beispielsweise der Betriebsart CCM in der Hauptrichtung und der Betriebsart DCM in der Nebenrichtung, erfolgt.

Sowohl von dem Schritt S3 als auch von dem Schritt S4 verzweigt das Verfahren dann zu einem Schritt S5, in dem gemäß der eingestellten Betriebsart ein Schalten der Schalter des DC/DC-Wandlers zur Regelung des Stromes I auf den vorgegebenen Stromsollwert I_{S} erfolgt. Entsprechend erfolgt ein Leistungsübertrag durch den DC/DC-Wandler, der hier als Schritt S6 dargestellt ist.

Von dem Schritt S6 aus verzweigt das Verfahren zurück zum Schritt S1. Das Verfahren wird in Form einer Endlosschleife ausgeführt. Die Wiederholfrequenz der dargestellten Verfahrensschritte S1 bis S6 kann so hoch sein, dass innerhalb einer Netzperiode die Betriebsart ggf. mehrfach gewechselt wird.

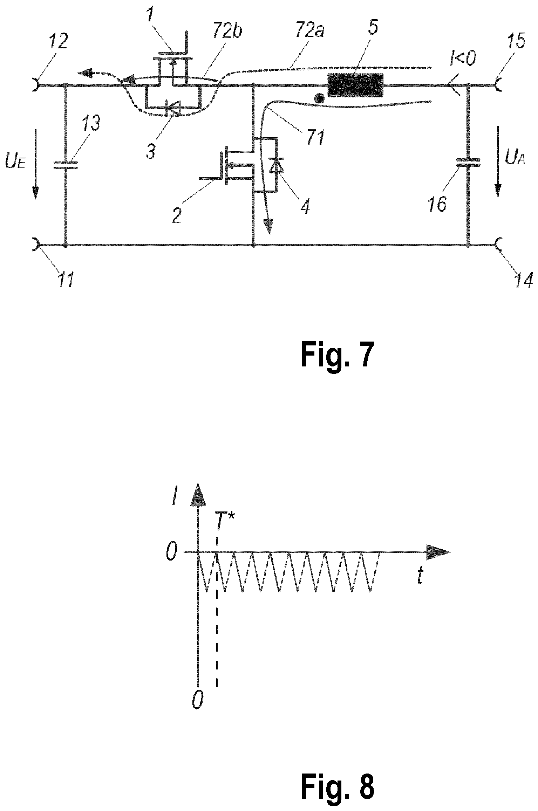

In Fig. 7 ist analog zu Fig. 4 der DC/DC-Wandler des ersten Ausführungsbeispiels mit Strompfeilen dargestellt, die den Stromfluss innerhalb des DC/DC-Wandlers in einer erfindungsgemäßen zweiten Betriebsart symbolisieren. Fig. 8 zeigt analog zu Fig. 5 die sich in der erfindungsgemäßen zweiten Betriebsart ergebende Zeitabhängigkeit des Stroms I.

Wiederum wird, wie in der im Zusammenhang mit Fig. 4 beschriebenen Ausführung der zweiten Betriebsart, auch hier in der Induktivität 5 abwechselnd ein zusätzliches Magnetfeld durch ein Strom I < 0 aufgebaut, indem in einem ersten Zeitabschnitt der Schalter 2 geschlossen ist (Strompfad 71), und abgebaut, indem in einem zweiten Zeitabschnitt bei geöffnetem zweiten Schalter 2 ein Stromfluss über die erste Freilaufdiode 3 (Strompfad 72a) oder alternativ den angesteuerten, geschlossenen ersten Schalter 1 (Strompfad 72b) fließt.

Im Unterschied zum Beispiel der Fig. 4 und 5 wird hier der DC/DC-Wandler im sogenannten Grenzlückbetrieb (BCM - Boundary Conduction Mode) betrieben. Es entfällt der dritte Zeitabschnitt innerhalb des Schaltzyklus beim Ausführungsbeispiel der Fig. 4 und 5, in dem kein Strom I durch die Induktivität 5 fließt. Um im zeitlichen Mittel dennoch die gleiche Leistung übertragen zu können, wird beim Ausführungsbeispiel der Fig. 7 und 8 die Schaltfrequenz erhöht. Es ergibt sich, wie in der Fig. 8 ersichtlich ist, eine entsprechend kürzere Periodendauer T* für ein Schaltzyklus. Die Anpassung der Schaltfrequenz oder der Periodendauer T* erfolgt dabei bevorzugt dynamisch, indem der erste Teil des Schaltzyklus (zweiter Schalter 2 geschlossen) unmittelbar dann gestartet wird, wenn der Strom I im zweiten Teil des Schaltzyklus (Stromfluss über die erste Freilaufdiode 3 oder den geschlossenen ersten Schalter 1) auf null absinkt. Die Schaltfrequenz wird in diesem BCM-Modus also so gewählt, dass der Strom I gerade auf null absinkt.

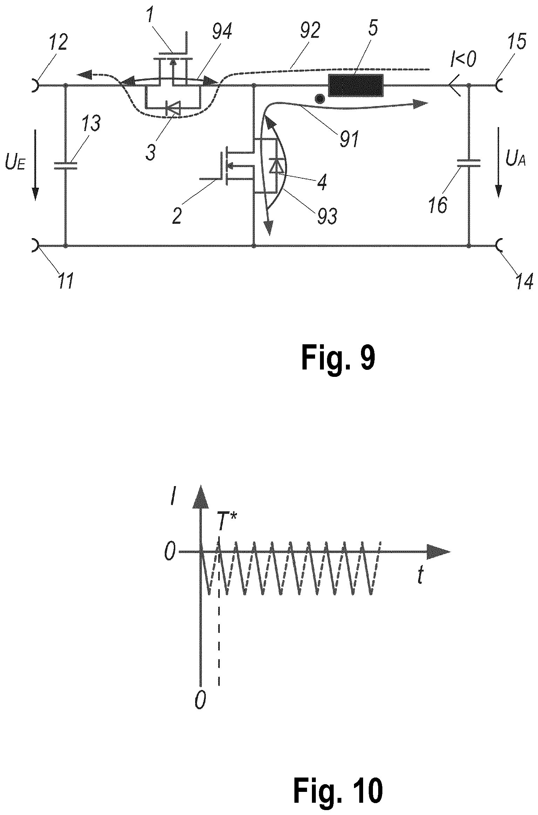

In den Fig. 9 und 10 ist in gleicher Weise wie in den Fig. 7 und 8 eine alternative erfindungsgemäße zweite Betriebsart angegeben. Diese ist dem BCM-Modus der Fig. 7 und 8 ähnlich, jedoch wird der Wechsel von dem zweiten Abschnitt des Schaltzyklus, in dem ein Stromfluss über den ersten Schalter 1 bzw. die erste Freilaufdiode 3 verläuft (Strompfad 92, 94), zu dem ersten Abschnitt des (nächsten)

Schaltzyklus, in dem eine Energiedeposition in der Induktivität 5 durch Stromfluss über den zweiten Schalter 2 bzw. die zweite Freilaufdiode 4 erfolgt (Strompfad 91, 93), nicht bei einem Stromfluss von I = 0 vorgenommen, sondern wenn über der Parallelschaltung des ersten Schalters 1 und der ersten Freilaufdiode 3 kurzzeitig in der Induktivität ein bei Betrieb in der Nebenrichtung ein in Hauptstromrichtung gemessener positiver Strom I>0 erreicht wird. Dies führt zu verringerten Schaltverlusten.

Es wird so für diesen Wechsel ein spannungsloses Einschalten der Schaltorgane 1 und 2 ermöglicht, das mit geringeren Schaltverlusten behaftet ist. Diese Betriebsweise eines DC/DC-Wandlers ist auch als RPM-Modus (Resonant Pole Mode) bekannt. Auch in dieser Betriebsweise ist die Schaltfrequenz variabel und wird dynamisch an die zu übertragende Leistung angepasst. Beim Wechsel einer Energieübertragung von der Hauptrichtung zu der Nebenrichtung wird sich die Schaltfrequenz erhöhen, da in der Nebenrichtung nur die kleinere effektive Induktivität zur Verfügung steht.

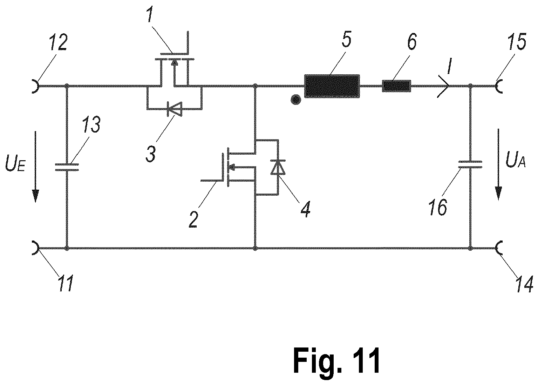

Fig. 11 zeigt analog zu Fig. 1 ein zweites Ausführungsbeispiel eines DC/DC-Wandlers in einem Blockschaltbild. Gleiche Bezugszeichen kennzeichnen hier gleiche oder gleichwirkende Elemente wie im ersten Ausführungsbeispiel. Der DC/DC-Wandlers kann in denselben Betriebsarten betrieben werden, wie sie im Zusammenhang mit dem ersten Ausführungsbeispiel beschrieben sind.

Im Unterschied zum Ausführungsbeispiel der Fig. 1 ist hier eine zusätzliche Induktivität 6 in Reihe zur Induktivität 5 angeordnet. Diese zusätzliche Induktivität 6 kann einen Kern aufweisen, der vorzugsweise entweder nicht vormagnetisiert ist oder entgegengesetzt zum Kern der Induktivität 5 vormagnetisiert ist. Die zusätzliche Induktivität trägt damit zumindest in der Nebenrichtung und, falls sie keinen vormagnetisierten Kern aufweist, auch in der Hauptrichtung zur Gesamtinduktivität, die zur Energiespeicherung verfügbar ist, bei. Insbesondere in der Nebenrichtung wird somit eine definierte effektive Induktivität bereitgestellt, die bevorzugt größer ist als die Streuinduktivität der Induktivität 5. Auch wenn die Induktivität 5 maximal vormagnetisiert ist, so dass von der Induktivität in der Nebenrichtung nur ihre Streuinduktivität als effektive Induktivität zur Verfügung steht, wirkt die Induktivität 6 mit ihrem Induktivitätswert als effektive Induktivität in der zweiten Betriebsart.

### Bezugszeichenliste

- 1: erster Schalter
- 2: zweiter Schalter
- 3: erste Freilaufdiode
- 4: zweite Freilaufdiode
- 5: Induktivität
- 6: Zusatzinduktivität

- 11,12: Eingangsanschluss
- 13: Eingangskondensator
- 14, 15: Ausgangsanschluss
- 16: Ausgangskondensator

- 21, 22a, 22b: Strompfad
- 41, 42a, 42b: Strompfad

- 71a, 72a, 72b: Strompfad
- 91, 92, 93, 94: Strompfad

- U_{E}: Eingangsspannung
- U_{A}: Ausgansspannung
- I: Strom
- t: Zeit
- T, T*: Periodendauer

## Patentansprüche

1. DC/DC-Wandler mit mindestens einem getakteten Schaltorgan (1, 2) und mindestens einer zwischen einem Eingangsanschluss (12) und einem Ausgangsanschluss (15) des DC/DC-Wandlers angeordneten Induktivität (5) zur Zwischenspeicherung einer von dem DC/DC-Wandler übertragenen Energie, wobei die Induktivität (5) einen Kern mit permanenter Magnetisierung aufweist, wobei der DC/DC-Wandler für einen bidirektionalen Betrieb eingerichtet ist, und wobei in einer ersten Energieübertragungsrichtung das mindestens eine Schaltorgan (1, 2) in einer ersten Betriebsart geschaltet wird und in einer zweiten, der ersten entgegengesetzten Energieübertragungsrichtung das mindestens eine Schaltorgan (1, 2) in einer von der ersten abweichenden zweiten Betriebsart geschaltet wird, **dadurch gekennzeichnet, dass**
in der zweiten Energieübertragungsrichtung und damit in der zweiten Betriebsart das mindestens eine getaktete Schaltorgan (1, 2) mit einer Schaltfrequenz geschaltet ist, die variabel ist und dynamisch an die zu übertragene Leistung angepasst ist.

2. DC/DC-Wandler nach Anspruch 1, aufweisend mindestens zwei getaktete Schaltorgane (1, 2), von denen ein erstes Schaltorgan (1) in einer Reihenschaltung mit der Induktivität (5) angeordnet ist, wobei ein Mittelabgriff zwischen dem ersten Schaltorgan (1) und der Induktivität (5) über ein zweites Schaltorgan (2) mit einem weiteren Ausgangsanschluss (14) verbunden ist.

3. DC/DC-Wandler nach Anspruch 1 oder 2, bei dem die erste Betriebsart CCM (Continuous Conduction Mode) und die zweite Betriebsart BCM (Boundary Conduction Mode) oder RPM (Resonant Pole Mode) ist, wobei in der Betriebsart RPM ein spannungsloses Einschalten der Schaltorgane (1, 2) erfolgt.

4. DC/DC-Wandler nach einem der Ansprüche 1 bis 3, bei dem ein Dauermagnet im Kern der Induktivität (5) angeordnet ist, um die permanente Magnetisierung zu erzielen.

5. DC/DC-Wandler nach einem der Ansprüche 1 bis 4, bei dem die permanente Magnetisierung größer als 80% und bevorzugt größer als 90% einer Sättigungsmagnetisierung des Kerns der Induktivität (5) ist.

6. DC/DC-Wandler nach einem der Ansprüche 1 bis 5, bei dem in einer Reihenschaltung zu der Induktivität (5) eine Zusatzinduktivität (6) angeordnet ist.

7. DC/DC-Wandler nach Anspruch 6, bei dem die Zusatzinduktivität (6) einen kleineren Induktivitätswert aufweist als die Induktivität (5).

8. Verfahren zum Betreiben eines DC/DC-Wandlers mit mindestens einem getakteten Schaltorgan (1, 2) und mindestens einer Induktivität (5) zur Zwischenspeicherung von dem DC/DC-Wandler übertragenen Energie, wobei
- die Induktivität (5) einen Kern mit permanenter Magnetisierung aufweist,
- der DC/DC-Wandler für einen bidirektionalen Betrieb mit einer ersten Energieübertragungsrichtung und einer der ersten entgegengesetzten zweiten Energieübertragungsrichtung eingerichtet ist,
- das mindestens eine Schaltorgan (1, 2) in der ersten Energieflussrichtung in einer ersten Betriebsart geschaltet wird,
- das mindestens eine Schaltorgan (1, 2) in der zweiten Energieübertragungsrichtung in einer von der ersten abweichenden zweiten Betriebsart geschaltet wird, wobei eine Schaltfrequenz des mindestens einen Schaltorgans (1, 2) variabel ist und dynamisch an die zu übertragene Leistung angepasst wird, und
- die Induktivität (5) in der ersten und der zweiten Energieflussrichtung in unterschiedlichen Richtungen von einem Strom durchflossen wird.

9. Verfahren nach Anspruch 8, bei dem die erste Betriebsart CCM (Continuous Conduction Mode) ist und die zweite Betriebsart BCM (Boundary Conduction Mode) oder RPM (Resonant Pole Mode), wobei in der Betriebsart RPM ein spannungsloses Einschalten der Schaltorgane (1, 2) erfolgt.

10. Verfahren nach Anspruch 8 oder 9, bei dem in der ersten Betriebsart das mindestens eine Schaltorgan (1, 2) mit einer vorgegebenen konstanten Schaltfrequenz geschaltet wird, wohingegen in der zweiten Betriebsart das mindestens eine Schaltorgan (1, 2) mit der variablen Schaltfrequenz geschaltet wird, wobei die variable Schaltfrequenz höher ist als die konstanten Schaltfrequenz der ersten Betriebsart.

11. Wechselrichter, insbesondere für eine Solaranlage, aufweisend einen DC/DC-Wandler nach einem der Ansprüche 1 bis 7.

## Claims

1. A DC/DC converter comprising at least one clocked switching element (1, 2) and at least one inductance (5) arranged between an input terminal (12) and an output terminal (15) of the DC/DC converter for the intermediate storage of an energy transmitted by the DC/DC converter, the inductance (5) comprising a core with permanent magnetisation, the DC/DC converter configured for bidirectional operation, and the at least one switching element (1, 2) being switched in a first energy transmission direction in a first mode of operation , and the at least one switching element (1, 2) being switched in a second mode of operation, which differs from the first, in a second energy transmission direction opposite to the first direction,
**characterized in that**
in the second energy transmission direction and thus in the second mode of operation, the at least one clocked switching element (1, 2) is switched at a switching frequency which is variable and dynamically adapted to the power to be transmitted.

2. The DC/DC converter according to claim 1, comprising at least two clocked switching elements (1, 2), of which a first switching element (1) is arranged in a series connection with the inductance (5), a center tap between the first switching element (1) and the inductance (5) being connected to a further output terminal (14) via a second switching element (2).

3. The DC/DC converter according to claim 1 or 2, in which the first mode of operation is CCM (Continuous Conduction Mode) and the second mode of operation is BCM (Boundary Conduction Mode) or RPM (Resonant Pole Mode), with the switching elements (1, 2) being switched on without voltage in the RPM mode of operation .

4. The DC/DC converter according to one of claims 1 to 3, in which a permanent magnet is arranged in the core of the inductor (5) in order to achieve permanent magnetisation.

5. The DC/DC converter according to one of claims 1 to 4, in which the permanent magnetisation is greater than 80% and preferably greater than 90% of a saturation magnetisation of the core of the inductor (5).

6. The DC/DC converter according to one of claims 1 to 5, in which an additional inductance (6) is arranged in a series connection to the inductance (5).

7. The DC/DC converter according to claim 6, in which the additional inductance (6) has a smaller inductance value than the inductance (5).

8. A method for operating a DC/DC converter comprising at least one clocked switching element (1, 2) and at least one inductance (5) for buffer storage of energy transmitted by the DC/DC converter, wherein
- the inductance (5) comprises a core with permanent magnetisation,
- the DC/DC converter is configured for bidirectional operation with a first energy transfer direction and a second energy transfer direction opposite to the first direction,
- the at least one switching element (1, 2) is switched in the first energy flow direction in a first mode of operation ,
- the at least one switching element (1, 2) is switched in the second energy transmission direction in a second mode of operation which differs from the first direction, a switching frequency of the at least one switching element (1, 2) being variable and being dynamically adapted to the power to be transmitted, and
- a current flows through the inductor (5) in different directions in the first and second energy flow directions.

9. The method according to claim 8, wherein the first mode of operation is CCM (Continuous Conduction Mode) and the second mode of operation is BCM (Boundary Conduction Mode) or RPM (Resonant Pole Mode), wherein in the RPM mode of operation the switching elements (1, 2) are switched on without voltage.

10. The method according to claim 8 or 9, wherein in the first mode of operation the at least one switching element (1, 2) is switched at a predetermined constant switching frequency, whereas in the second mode of operation the at least one switching element (1, 2) is switched at the variable switching frequency, the variable switching frequency being higher than the constant switching frequency of the first mode of operation .

11. An inverter, in particular for a solar installation, comprising a DC/DC converter according to one of claims 1 to 7.

## Revendications

1. Convertisseur DC/DC avec au moins un élément de commutation cadencé (1, 2) et au moins une inductance (5) disposée entre une borne d'entrée (12) et une borne de sortie (15) du convertisseur DC/DC pour le stockage intermédiaire d'une énergie transmise par le convertisseur DC/DC, l'inductance (5) présentant un noyau à magnétisation permanente, le convertisseur DC/DC étant conçu pour un fonctionnement bidirectionnel, et le au moins un élément de commutation (1, 2) étant commuté dans un premier sens de transmission d'énergie dans un premier mode de fonctionnement, et le au moins un élément de commutation (1, 2) étant commuté dans un deuxième mode de fonctionnement, différent du premier, dans un deuxième sens de transmission d'énergie opposé au premier, **caractérisé en ce que**
dans le deuxième sens de transmission de l'énergie et donc dans le deuxième mode de fonctionnement, le au moins un élément de commutation cadencés (1, 2) est commuté à une fréquence de commutation variable et adaptée dynamiquement à la puissance à transmettre.

2. Convertisseur DC/DC selon la revendication 1, comportant au moins deux éléments de commutation (1, 2) cadencés, dont un premier élément de commutation (1) est disposé en série avec l'inductance (5), une prise médiane entre le premier élément de commutation (1) et l'inductance (5) étant reliée à une autre borne de sortie (14) par l'intermédiaire d'un deuxième élément de commutation (2).

3. Convertisseur DC/DC selon la revendication 1 ou 2, dans lequel le premier mode de fonctionnement est CCM (Continuous Conduction Mode) et le second mode de fonctionnement est BCM (Boundary Conduction Mode) ou RPM (Resonant Pole Mode), les éléments de commutation (1, 2) étant mis en marche sans tension dans le mode de fonctionnement RPM.

4. Convertisseur DC/DC selon l'une des revendications 1 à 3, dans lequel un aimant permanent est disposé dans le noyau de l'inducteur (5) afin d'obtenir une magnétisation permanente.

5. Convertisseur DC/DC selon l'une des revendications 1 à 4, dans lequel la magnétisation permanente est supérieure à 80% et de préférence supérieure à 90% d'une magnétisation de saturation du noyau de l'inducteur (5).

6. Convertisseur DC/DC selon l'une des revendications 1 à 5, dans lequel une inductance supplémentaire (6) est disposée dans un montage en série avec l'inductance (5).

7. Convertisseur DC/DC selon la revendication 6, dans lequel l'inductance supplémentaire (6) a une valeur d'inductance inférieure à l'inductance (5).

8. Procédé pour faire fonctionner un convertisseur DC/DC comportant au moins un élément de commutation cadencé (1, 2) et au moins une inductance (5) pour le stockage intermédiaire de l'énergie transmise par le convertisseur DC/DC, dans lequel
- l'inductance (5) possède un noyau à magnétisation permanente,
- le convertisseur DC/DC est conçu pour un fonctionnement bidirectionnel avec un premier sens de transfert d'énergie et un second sens de transfert d'énergie opposé au premier,
- le au moins un élément de commutation (1, 2) est commuté dans la première direction du flux d'énergie dans un premier mode de fonctionnement,
- le au moins un élément de commutation (1, 2) est commuté dans le deuxième sens de transmission de l'énergie dans un deuxième mode de fonctionnement qui diffère du premier, une fréquence de commutation du au moins un élément de commutation (1, 2) étant variable et étant adaptée dynamiquement à la puissance à transmettre, et
- un courant circule dans l'inducteur (5) dans différentes directions dans les premier et deuxième sens de circulation de l'énergie.

9. Procédé selon la revendication 8, dans lequel le premier mode de fonctionnement est CCM (Continuous Conduction Mode) et le second mode de fonctionnement est BCM (Boundary Conduction Mode) ou RPM (Resonant Pole Mode), dans lequel, dans le mode de fonctionnement RPM, les éléments de commutation (1, 2) sont mis en marche sans tension.

10. Procédé selon la revendication 8 ou 9, dans lequel, dans le premier mode de fonctionnement, le au moins un élément de commutation (1, 2) est commuté à une fréquence de commutation constante prédéterminée, tandis que dans le deuxième mode de fonctionnement, le au moins un élément de commutation (1, 2) est commuté à la fréquence de commutation variable, la fréquence de commutation variable étant supérieure à la fréquence de commutation constante du premier mode de fonctionnement.

11. Onduleur, en particulier pour une installation solaire, comprenant un convertisseur DC/DC selon l'une des revendications 1 à 7.
